# EUROPEAN PATENT APPLICATION

(11) **EP 3 489 884 A1**
(43) Date of publication of application: **29.05.2019**
(21) Application number: 17831028.0
(22) Date of filing: 19.07.2017
(51) Int. Cl.: G06Q 50/02, B02B 1/08, F26B 25/00, G05B 23/02

(54) **OPERATION ASSISTANCE SYSTEM FOR GRAIN PROCESSING FACILITY, AND AUTOMATIC OPERATION CONTROL METHOD FOR SATELLITE FACILITY**

(30) Priority: 22.07.2016 JP 2016144293
(71) Applicant: Satake Corporation, Chiyoda-ku Tokyo 101-0021 (JP)
(72) Inventor: MATSUDA, Masanori, Tokyo 101-0021 (JP); HAYASHI, Noriyuki, Tokyo 101-0021 (JP)
(74) Representative: Hoffmann Eitle
(86) International application number: PCT/JP2017/026023
(87) International publication number: WO 2018/016512

(57) **Abstract**

A satellite facility is operated in a unmanned manner even in a grain processing facility (a common grain drying and preparing facility, a rice milling factory, a food factory or the like, for example) where the characteristics of starting materials vary with time. An operation assistance system for a grain processing facility includes: a database configured to store, in a correlated manner, a first characteristic of a first grain delivered to a model facility, a first operational parameter of the model facility used in processing the first grain in the model facility, and an index value actually measured with respect to taste of the first grain after being processed in the model facility; a reception portion configured to receive a second characteristic of a second grain delivered to a satellite facility; a calculation portion configured to calculate, based on the received second characteristic and information accumulated in the database, a second operational parameter to be used in processing the second grain in the satellite facility; and a providing portion configured to provide the calculated second operational parameter to the satellite facility via a network.

## Description

### TECHNICAL FIELD

The present invention relates to a technique for controlling operation of a grain processing facility.

### BACKGROUND ART

Conventionally, PTL 1 discloses a crop management system for promptly transporting crop to a proper transport destination after harvesting the crop with a harvesting machine.

A common grain drying facility is known which includes a plurality of satellite facilities and a terminal facility. The satellite facilities receive unhusked rice carried from farmers, and perform processing up to semi drying. The terminal facility is installed at the center of the plurality of satellite facilities, and receives the semi-dried unhusked rice and performs processing up to main drying (PTL 1 described below, for example). Each of the satellite facilities and the terminal facility require at least one operator to be stationed at all times so as to perform tasks. That is, the terminal facility and the satellite facilities are connected with each other through some form of communication network. However, each facility does not perform an autonomous behavior as a group where each facility regulates itself so as to perform its functions. Accordingly, any facilities cannot be converted to unmanned operation.

However, recently, a mechanism has become popular where various "things" are connected to the Internet and exchange information so as to control each other (Internet of Things, "IoT").

NPL 1 describes the following. "DENSO CORPORATION will introduce an "IoT", which allows all sorts of things to be connected to the Internet, in all factories all around the world. Achieving instant awareness and analysis of the operational conditions and the like of installations will improve productivity by 30%.... (omitted) ... DENSO aims to connect domestic and foreign factories which manufacture the same product as the model factory, thus connecting all of approximately 130 factories with each other by 2018".

In the technique described in NPL 1, the model factory acting as a reference and other factories which manufacture completely the same product as the model factory are cooperate with each other through the Internet, thus monitoring other factories performing a behavior as a group following the model factory. As a result, determinations in other factories become unnecessary and hence, other factories can be converted to unmanned operation.

Industrial products can easily adopt such an IoT technology (to manufacture completely the same products). However, in a grain processing facility (a common grain drying and preparing facility, a rice milling factory, a food factory or the like, for example) where the characteristics of starting materials vary with time, information (machine settings in the factory, skill of a person performing the settings, production area of raw materials and the like, for example) which is required for setting operational parameters cannot be unambiguously determined. For this reason, the grain processing facility has to rely on human intuition or experience and hence, it is difficult to convert the grain processing facility to unmanned operation.

### CITATION LIST

### PATENT LITERATURE

PTL 1: Japanese Patent No. 3362735

### NON PATENT LITERATURE

NPL 1: authored by Yusuke Yokota, "We want to know expanding IoT, and how will factories change?," [online], 3 July, 2016, Nihon Keizai Shinbun, morning edition [retrieved on 6 July, 2016], Internet <URL:http://www.nikkei.com/article/DGKKZO04393180S6A700C1TJC000/>

### SUMMARY OF INVENTION

### TECHNICAL PROBLEM

The present invention has been made in view of the above-mentioned problems, and it is an object of the present invention to convert a satellite facility to unmanned operation also in a grain processing facility (a common grain drying and preparing facility, a rice milling factory, a food factory or the like, for example) where the characteristics of starting materials vary with time.

### SOLUTION TO PROBLEM

According to a first aspect of the present invention, an operation assistance system for a grain processing facility is provided. The operation assistance system includes: a database configured to store, in a correlated manner, a first characteristic of a first grain to be delivered to a model facility, a first operational parameter of the model facility used in processing the first grain in the model facility, and an index value actually measured with respect to taste of the first grain after being processed in the model facility; a reception portion configured to receive a second characteristic of a second grain to be delivered to a satellite facility; a calculation portion configured to calculate, based on the received second characteristic and information accumulated in the database, a second operational parameter to be used in processing the second grain in the satellite facility; and a providing portion configured to provide the calculated second operational parameter to the satellite facility via a network.

With this operation assistance system, optimum operational parameters (second operational parameters) for the satellite facility are calculated based on the processing record in the model facility. Accordingly, providing the second operational parameters to the satellite facility allows the satellite facility to preferably perform unmanned operation according to the second parameters. In other words, it is possible to perform unmanned automatic operation of the satellite facility following (imitating) the standard model facility.

According to a second aspect of the present invention, in the first aspect, the satellite facility includes a plurality of satellite facilities. The calculation portion calculates an optimum operational parameter for processing the second grain in the model facility, and performs a correction on the optimum operational parameter according to conditions of each of the plurality of satellite facilities, thus calculating the second parameter. According to this aspect, even when each of the plurality of satellite facilities has own conditions (particular circumstances which differ from the model facility, such as area differences, difference in cultivar, difference in environmental conditions, or difference in installation specifications, for example), a correction which corresponds to such conditions is performed. Accordingly, it is possible to preferably perform automatic operation of the respective satellite facilities.

According to a third aspect of the present invention, in the first or second aspect, the reception portion receives the second characteristic via the network. According to this aspect, for example, an operator of the model facility or a farmer utilizing the satellite facility can remotely input the second characteristic by using a communication terminal. Accordingly, convenience for a user is enhanced.

According to a fourth aspect of the present invention, in any one of the first to third aspects, the operation assistance system includes a controller configured to perform automatic operation of the satellite facility based on the second parameter provided by the providing portion. According to this aspect, it is possible to acquire advantageous effects that are the same as the advantageous effects in any one of the first to third aspects.

According to a fifth aspect of the present invention, a grain processing facility is provided. The grain processing facility includes the model facility, the satellite facility, and the operation assistance system described in any one of the first to fourth aspects. With this grain processing facility, it is possible to acquire advantageous effects that are the same as the advantageous effects in any one of the first to fourth aspects.

According to a sixth aspect of the present invention, in the fifth aspect, the model facility includes a data recording device which records various data of an installation which the model facility includes. According to this aspect, it is possible to acquire processing data when respective processing (rough sorting, drying, husking, sorting, for example) are performed in relation to received product data, and the processing data can be used to calculate the second operational parameter.

According to a seventh aspect of the present invention, in the fifth or sixth aspect, each of the model facility and the satellite facility is a common grain drying and preparing facility. According to an eighth aspect of the present invention, in the fifth or sixth aspect, each of the model facility and the satellite facility is a rice milling factory.

According to a ninth aspect of the present invention, there is provided a method for controlling automatic operation of a satellite facility of a wide area distributed type grain processing facility which includes a model facility and the satellite facility. The method includes: recording a first characteristic of a first grain to be delivered to the model facility; processing the first grain in the model facility; actually measuring an index value with respect to taste of the processed first grain; providing a database which stores, in a correlated manner, the first characteristic, a first operational parameter of the model facility used in processing the first grain in the model facility, and the index value; receiving a second characteristic of a second grain to be delivered to the satellite facility; calculating, based on the received second characteristic and information accumulated in the database, a second operational parameter to be used in processing the second grain in the satellite facility; providing the calculated second operational parameter to the satellite facility via a network; and performing automatic operation of the satellite facility based on the provided second parameter. With this method, it is possible to acquire advantageous effects that is the same as the advantageous effects in the first aspect.

### BRIEF DESCRIPTION OF DRAWINGS

Fig. 1 is a conceptual view of a grain processing facility according to one embodiment of the present invention.
Fig. 2 is a view showing a schematic configuration of common grain drying and preparing facilities as a model facility and a satellite facility according to a first embodiment.
Fig. 3 is a table showing one example of a configuration of a database of the model facility.
Fig. 4 is a table showing one example of a configuration of a database of the model facility.
Fig. 5 is a conceptual view of processing for calculating operational parameters of the satellite facility.

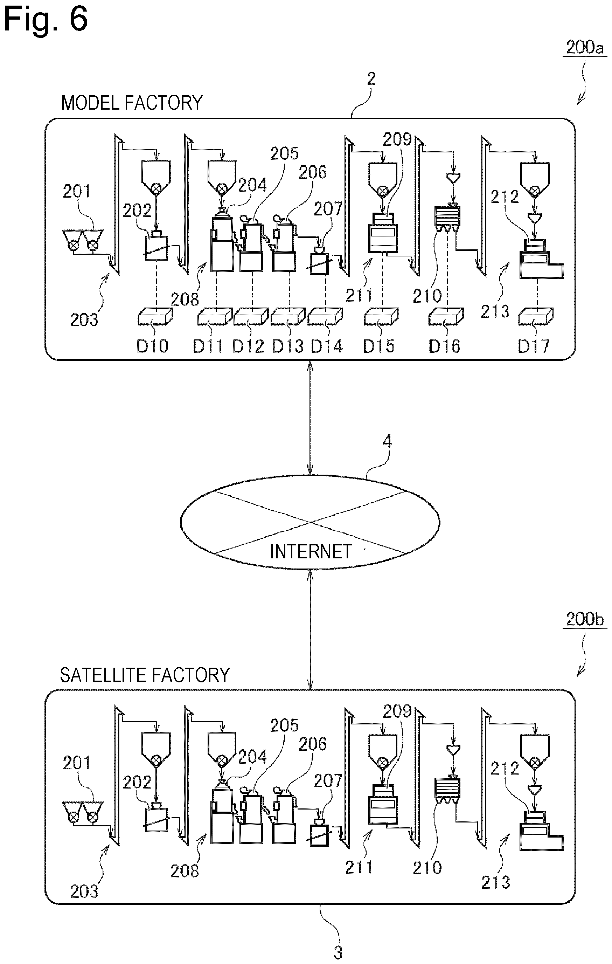

Fig. 6 is a view showing a schematic configuration of rice milling factories as a model facility and a satellite facility according to a second embodiment.

### DESCRIPTION OF EMBODIMENTS

### A. First embodiment:

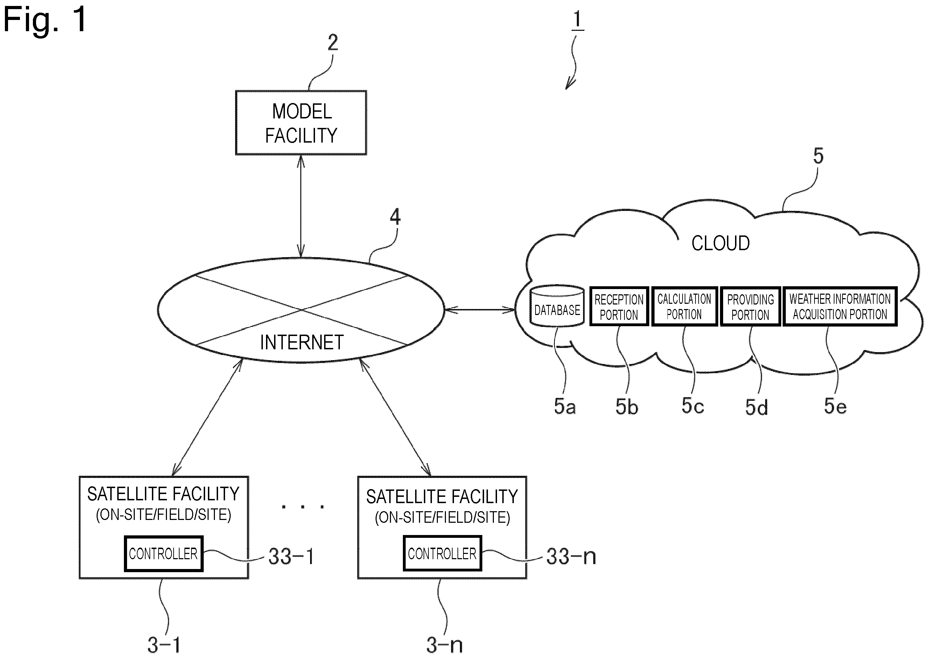

Hereinafter, a first embodiment of the present invention is described with reference to the drawings. Fig. 1 is a conceptual view of a grain processing facility 1 according to one embodiment of the present invention. As shown in Fig. 1, the grain processing facility 1 (hereinafter also simply referred to as "facility 1") according to one embodiment of the present invention includes a standard model facility 2 acting as a model or a reference, a plurality of (n pieces in this embodiment) satellite facilities (also referred to as on-site facilities, field facilities, farm field facilities or site facilities) 3-1 to 3-n which are installed in respective production areas (the satellite facilities 3-1 to 3-n are also collectively referred to as "satellite facilities 3"), and a cloud server 5. The satellite facilities are also referred to as on-site facilities, field facilities, farm field facilities or site facilities. The model facility 2, the satellite facilities 3, and the cloud server 5 are communicably connected with one another via a network (the Internet 4 in this embodiment). Any network, such as a dedicated line, may be adopted in place of the Internet 4.

In this embodiment, the model facility 2 and each satellite facility 3 are respectively realized as common grain drying and preparing facilities 100a, 100b where tasks from drying of grain to packaging and shipping are performed. The common grain drying and preparing facility is used in common by several to several hundreds of farmers. Operators are placed in the model facility 2 so as to manage the operation of the model facility 2. However, the satellite facilities 3 perform unmanned automatic operation.

The cloud server 5 acts as an operation assistance system for causing the satellite facilities 3 to perform unmanned automatic operation. The cloud server 5 includes a database 5a, a reception portion 5b, a calculation portion 5c, a providing portion 5d, and a weather information acquisition portion 5e. These functional portions can be realized by performing predetermined programs stored in a memory. The database 5a stores, in a correlated manner, the characteristics of grain (rice in this embodiment) to be delivered to the model facility 2, operational parameters used in processing this rice in the model facility 2, and index values actually measured with respect to taste of the rice after being processed in the model facility 2. The reception portion 5b receives the characteristics of rice to be delivered to the satellite facility 3. The calculation portion 5c calculates, based on the characteristics received by the reception portion 5b and information accumulated in the database 5a, operational parameters to be used in processing rice in the satellite facility 3. The providing portion 5d provides the operational parameters calculated by the calculation portion 5c to the satellite facility 3 via the Internet 4. The weather information acquisition portion 5e acquires weather information of an area where the satellite facility 3 is installed via the Internet 4. Such weather information is provided on the Internet 4 by Japan Meteorological Agency or a commercial weather information company, for example. These functions of the cloud server 5 are described later in detail.

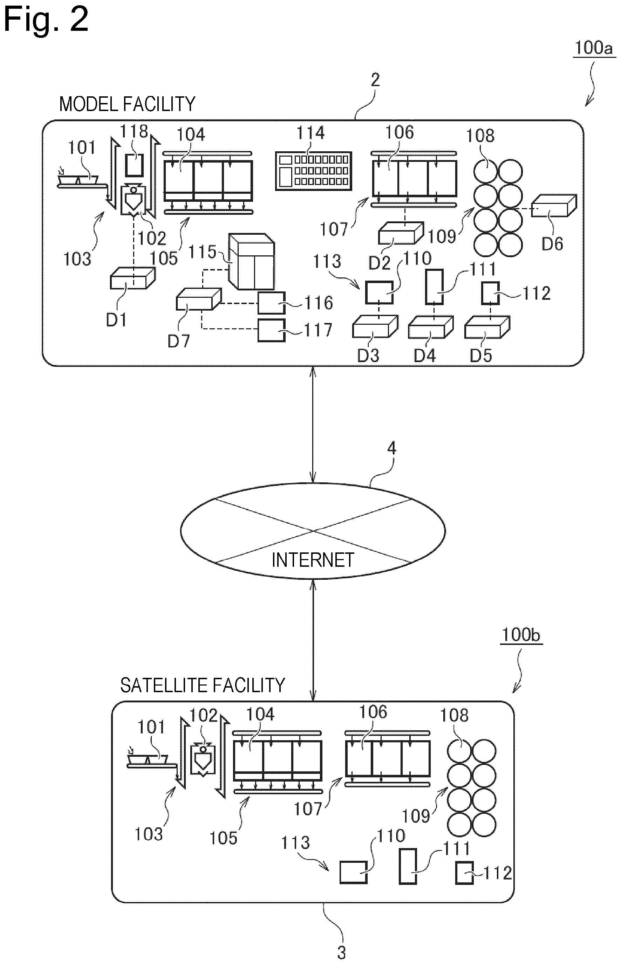

Fig. 2 is a view showing the schematic configuration of the common grain drying and preparing facility 100a and the common grain drying and preparing facility 100b as the model facility 2 and the satellite facility 3. As shown in the drawing, the model facility 2 (common grain drying and preparing facility 100a) includes product receiving hoppers 101, a product receiving portion 103, an aeration-drying portion 105, a flame-drying portion 107, a silo portion 109, a husker 110, a sorter 111, and a preparing portion 113. The product receiving hopper 101 mainly receives unhusked grain which is carried into the facility from a farmer. The product receiving portion 103 includes a rough sorting machine 118 and a received product measuring machine 102. The aeration-drying portion 105 includes a plurality of aeration dryers 104. The flame-drying portion 107 includes flame dryers 106 which dry grain to a predetermined moisture while circulating the grain. The silo portion 109 includes a plurality of silos 108 for storing dried grain. The husker 110 takes out the dried grain from the silo 108 and husks the grain. The sorter 111 performs screening of the husked grain. The preparing portion 113 measures and packages the screened grain.

The model facility 2 further includes, as ancillary facilities, a test dryer 114, an autonomous inspection device 115, a grain particle discriminator 116, and a taste measuring instrument 117. The test dryer 114 dries sample unhusked rice, extracted from the product receiving portion 103, to a predetermined moisture value. The autonomous inspection device 115 performs hulling processing on the dried sample unhusked rice and separates the dried sample unhusked rice into whole grain and screenings, and then calculates a yield rate from respective weight values of whole grain and screenings. The grain particle discriminator 116 takes out grain particles from the autonomous inspection device 115 and optically calculates the grade and the like of the grain particles. The taste measuring instrument 117 optically calculates a palatability value or the like. The grade is an index which is calculated by actually measuring the percentage of whole grain, a moisture percentage, and the percentage of damaged grains, such as colored grains and immature grains. The index significantly affects taste and hence, the index can be considered as one of taste indexes. The palatability value is a taste index which is calculated based on amylose, protein, moisture and fatty acids measured by a near-infrared analyzer. A palatability value may be acquired by a sensory test in place of or in addition to the analysis test.

Data recording devices D which acquire various data are electrically connected to respective apparatuses forming the model facility 2. For example, a data recording device D1 is connected to the rough sorting machine 118 and the received product measuring machine 102. The data recording device D1 acquires rough sorting data (weight of grain with rachis branches (unhusked rice with rice rachis), weight of fine unhusked rice, percentage of grain with rachis branches, weight of straw, ratio of unhusked rice to straw and the like) and received product data (weight value of grain particles, moisture value of received product, cultivar, owner code of farmer, production area (location of farm field) and the like). That is, the data recording device D1 acquires data related to the characteristics of rice which is delivered. A data recording device D2 is connected to the flame dryer 106. The data recording device D2 acquires drying data (initial moisture value of unhusked rice before the drying operation, final moisture value of the unhusked rice after the drying operation, drying loss rate, total drying time, fuel consumption rate, total amount of power and the like). Further, a data recording device D3 is connected to the husker 110. The data recording device D3 acquires husking data (hulling performance, hulling rate, mixing rate of immature grains, frequency of exchanging hulling roll, maximum current value, average current value, minimum current value, total amount of power and the like).

A data recording device D4 is connected to the sorter 111. The data recording device D4 acquires sorting data (removal rate (sorting rate) of defective grains, rotational speed of a sorting cylinder of a rotary sorter, the number of times of operations of an ejector of a color sorter, maximum current value, average current value, minimum current value, total amount of power and the like). A data recording device D5 is connected to a measuring and packaging machine 112. The data recording device D5 acquires measuring and packaging data (measurement frequency, cumulative total value of (shipped) measurement, the cumulative number of (shipped) packaging bags, total amount of power and the like). Further, a data recording device D6 is connected to the silos 108. The data recording device D6 acquires storage data (storage period, frequency of rotation, maximum temperature of grain, minimum temperature of grain, average temperature of grain and the like).

A data recording device D7 is connected to the autonomous inspection device 115, the grain particle discriminator 116 and the taste measuring instrument 117. The data recording device D7 acquires autonomous inspection data (weight values of unhusked rice, husked rice, whole grain, and screenings, moisture, yield rate, cultivar, owner code of farmer, and production area (location of farm field) and the like), grade data (weight values of whole grain, screenings, colored grains and the like), and palatability data (protein content rate, amylose content rate, palatability sensory evaluation, palatability value and the like).

On the other hand, as shown in Fig. 2, the satellite facility 3 (common grain drying and preparing facility 100b) is not provided with the test dryer 114, the autonomous inspection device 115, and various instruments, such as the various data recording devices D1 to D7.

The operation management of the above-mentioned facility 1 is described hereinafter. First, when rice is delivered to the model facility 2, the data recording device D1 acquires received product data, such as producer, cultivar, and production area, for each sample of a received product. This operation is performed such that a delivery person or the operator of the model facility 2 inputs such data by using a user interface. Next, the received rice is subjected to sorting and drying processing by various installations so that the data recording devices D2 to D7 acquire preparing processing data which are obtained by quantifying processing conditions of the preparing machine at the time of the sorting and drying processing. Further, the data recording device D7 actually measures index values (grade data and palatability data in this embodiment) of taste of the processed rice. Information acquired by the data recording devices D1 to D7 is recorded in the database 5a via the Internet 4 in a correlated manner.

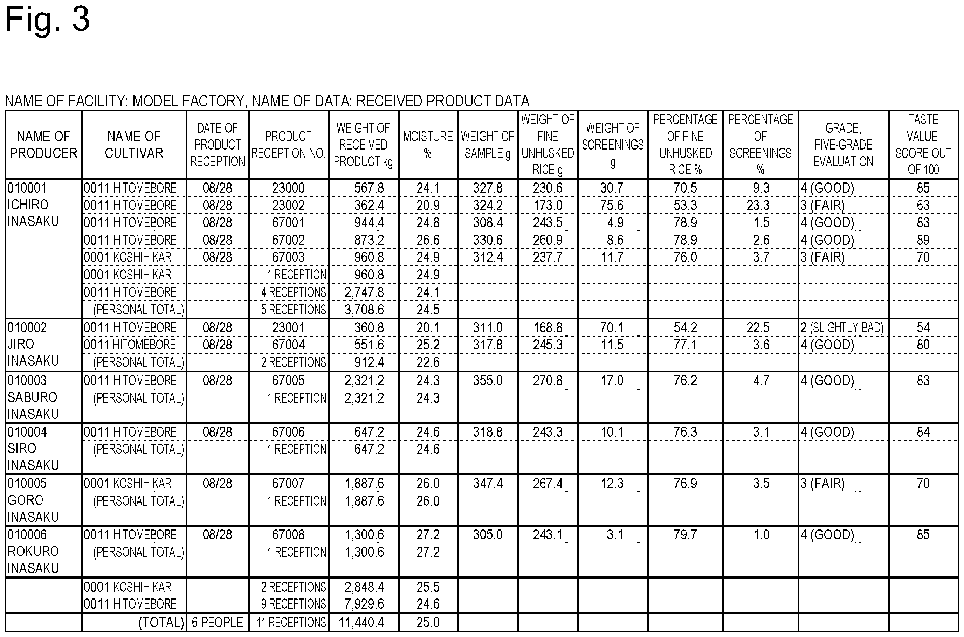

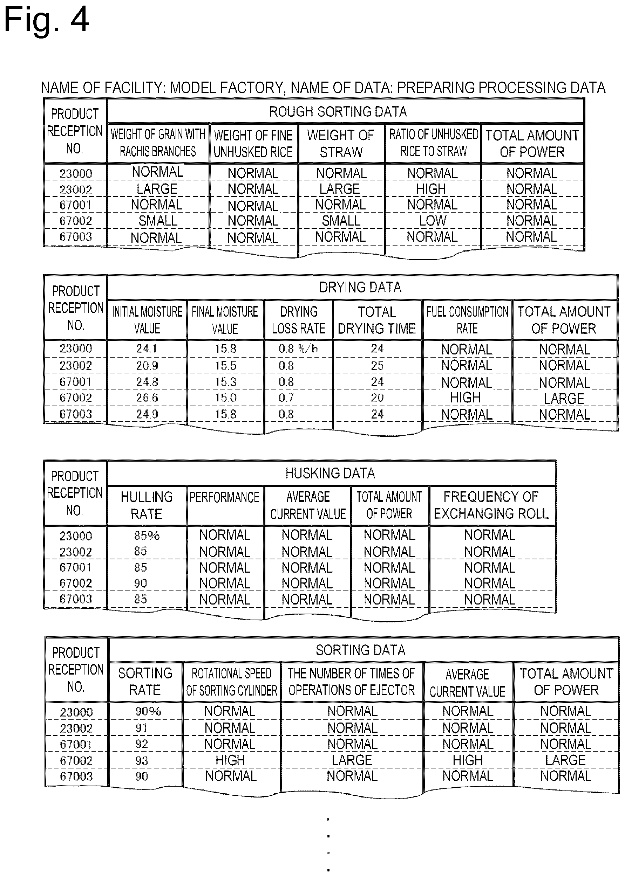

Fig. 3 and Fig. 4 show one example of a basic configuration of a database of the model facility. Fig. 3 shows information acquired by the data recording devices D1, D7. Fig. 4 shows preparing processing data, for example, rough sorting data, drying data, husking data, sorting data and the like, which are acquired by the data recording devices D1 to D4 and the like (measuring and packaging data and storage data are omitted from the table). Information shown in Fig. 4 is stored while being correlated to respective "product reception No." shown in Fig. 3.

An extremely large amount of data may be accumulated in the database 5a over a long period of time. The database 5a may also accumulate information of production areas of all over Japan. Reference operational parameters may be set for each specific cultivar produced in a specific production area, based on this database. The reference operational parameters are operational parameters (operational parameters which are correlated to the grade of "good" or higher and a palatability value of 80 or more in Fig. 3, for example) which can acquire an index value of favorable taste. For example, preparing processing data when rice satisfying conditions " rice which is produced in district A in prefecture A, and whose cultivar is Koshihikari" was processed may be set in the model facility 2 as reference operational parameters, while being correlated to "rice which is produced in district A in prefecture A, and whose cultivar is Koshihikari".

Although not shown in the drawing, weather information acquired by the weather information acquisition portion 5e may also be recorded in the database 5a. This weather information is weather data which corresponds to production area of rice and harvest year forming the base of each data group accumulated in the database 5a. To be more specific, weather information may be cumulative hours of sunlight or cumulative temperature (cumulative value of daily average temperatures) within a period from sowing to harvesting, for example. Cumulative hours of sunlight affect maturity of rice, and cumulative temperature affects protein content. Accordingly, the cumulative hours of sunlight and the cumulative temperature are important factors for producing rice with desirable taste.

Next, by utilizing the database 5a prepared in this manner, operational parameters of the satellite facility 3 are calculated according to the characteristics of rice delivered to the satellite facility 3.

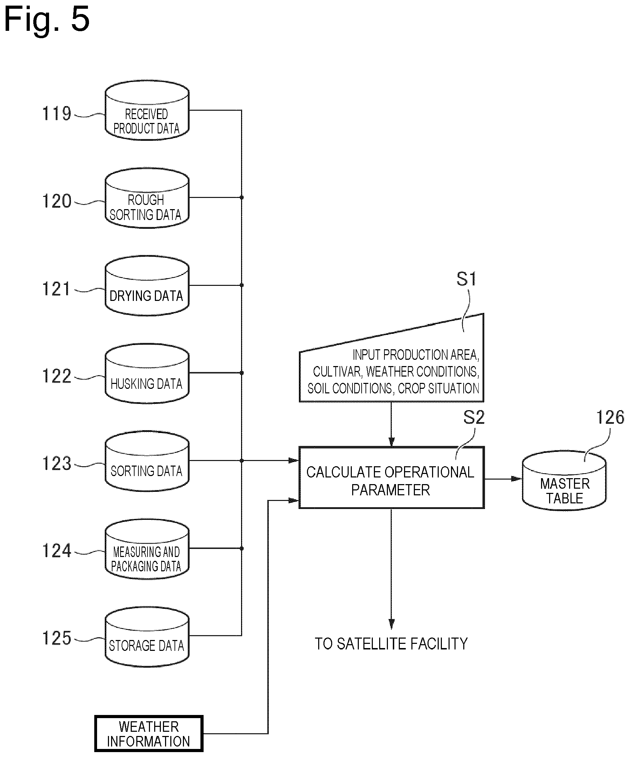

Fig. 5 is a conceptual view of processing for calculating operational parameters of the satellite facility 3. As shown in Fig. 5, this processing is started when an operator of the model facility 2 or a farmer (delivery person) utilizing the satellite facility 3 inputs the characteristics of rice delivered to the satellite facility 3 (step S1). The characteristics are arbitrary factors which may affect quality of rice. Such factors include a production area, cultivar, weather conditions, soil conditions, crop situation and the like, for example. This input may be performed by using an information terminal, such as a smartphone, via the Internet 4, for example. Alternatively, such input may be performed via a user interface of the model facility 2 or the satellite facility 3. Such input content is received by the reception portion 5b of the cloud server 5.

Next, the calculation portion 5c of the cloud server 5 (Fig. 1) retrieves various data files 119 to 125 (Fig. 5) stored in the database 5a based on various factors received by the reception portion 5b. Further, the weather information acquisition portion 5e of the cloud server 5 acquires weather information of an area where the satellite facility 3 is located via the Internet 4.

Then, based on the rice characteristics (weather information acquired by the weather information acquisition portion 5e may be included) received by the reception portion 5b, and information accumulated in the database 5a, the calculation portion 5c calculates optimum operational parameters for processing rice having the rice characteristics received in the model facility 2 by the reception portion 5b (step 2). This processing may be processing which extracts operational parameters having rice characteristics which approximate rice characteristics received by the reception portion 5b from the above-mentioned reference operational parameters (operational parameters with which an index value of desirable taste was acquired in the past), for example.

Further, in this embodiment, correction is made on the optimum operational parameters according to conditions of each satellite facility 3 (that is, particular circumstances which differ from the model facility 2, such as area differences, difference in cultivar, difference in environmental conditions, or difference in installation specifications, for example). The contents of the correction are set in advance as follows. An index value of taste of rice processed in the satellite facility 3 using the above-mentioned optimum operational parameters is actually measured on a trial basis, and then the contents of correction are empirically and experimentally set based on the relationship between the optimum operational parameters and the index value of taste. This correction may be set in advance for each combination between rice characteristics before correction and rice characteristics after correction. For example, a correction coefficient in the correspondence between "rice which is produced in district A in prefecture A, and whose cultivar is Koshihikari" and "rice which is produced in district B in prefecture B, and whose cultivar is Hinohikari" may be stored in the table.

After corrected values (also referred to as "corrected operational parameters") are calculated in this manner, the corrected values are stored in a master table 126 of the cloud server 5 (Fig. 5). At the same time, the corrected values are provided to the satellite facility 3 by the providing portion 5d via the Internet 4.

In the satellite facility 3, a controller 33 receives the corrected operational parameters provided by the providing portion 5d, and automatically operates various installations of the satellite facility 3 based on the corrected operational parameters.

Such calculation of optimum operational parameters and/or correction processing may be performed using logical reasoning based on the data files 119 to 125, or AI (Artificial Intelligence) which learns from the past experience. Various known methods or algorithms may be used, such as experimental design, Neural Network, deep learning, fuzzy inference, multivariate analysis (Mahalanobis Distance, multiple linear regression analysis or the like), sparse modeling, or support vector machine, for example. Further, it may be configured such that the index value of taste of rice processed in the satellite facility 3 is actually measured periodically, and this index value of taste and rice characteristics are provided in a correlated manner to the cloud server 5 as a feedback, thus causing AI to perform learning.

With the above-mentioned facility 1, the satellite facility 3 can be operated with optimum parameters based on record at the model facility 2. Accordingly, a common grain drying and preparing facility, where the characteristics of starting materials vary with time, is also monitored to perform a behavior as a group following the model facility 2. Accordingly, it is also possible to convert the satellite facility 3 into unmanned operation.

Further, in calculating operational parameters to be used in the satellite facility 3, particular circumstances between the model facility 2 and the satellite facility 3 are taken into account by performing the correction processing. Accordingly, a preferable operation corresponding to the particular circumstances of the satellite facility 3 can be achieved with a simple method.

Further, the satellite facility 3 can be basically operated following the standard model facility 2 and hence, the satellite facility 3 does not necessarily require the test dryer 114, the autonomous inspection device 115, and various instruments, such as the various data recording devices D1 to D7. Accordingly, the satellite facility 3 can be simplified compared to the model facility 2.

### B. Second embodiment:

A second embodiment of the present invention is described. In the second embodiment, a model facility 2 and a satellite facility 3 are respectively realized as rice milling factories 200a, 200b where screened husked rice is milled, and thereafter is sorted and measured and bagged, and then the rice is shipped in this embodiment. Hereinafter, the description of points which are the same as the points in the first embodiment is omitted, and only points which make this embodiment different from the first embodiment are described.

The rice milling factory 200a includes a product receiving portion 203, a rice milling portion 208, a screening portion 211, and a measuring and packaging portion 213. The product receiving portion 203 includes product receiving hoppers 201 which receive husked rice carried into the factory from the market, and a rough sorting machine 202. The rice milling portion 208 includes a plurality of rice milling machines 204, 205, 206, and a stone removing machine 207. The screening portion 211 includes a color sorter 209 and a sieving machine 210. The measuring and packaging portion 213 includes a measuring and packaging machine 212.

In the same manner as the first embodiment, data recording devices D which acquire various data are electrically connected to respective apparatuses. For example, a data recording device D10 is connected to the product receiving hoppers 201 and the rough sorting machine 202. The data recording device D10 acquires received product data (weight value of grain particles, moisture value of received product, cultivar, owner code of farmer, production area (location of farm field) and the like) and rough sorting data (percentage of mixing of foreign substance, such as a string-like material, weight of whole grain and the like). A data recording device D11 is connected to the rice milling machine (first machine) 204. The data recording device D11 acquires first machine polishing data (current value, yield, whiteness, total driving time, total amount of power and the like). In the same manner, a data recording device D12 is connected to the rice milling machine (second machine) 205. The data recording device D12 acquires second machine polishing data. A data recording device D13 is connected to the rice milling machine (third machine) 206. The data recording device D13 acquires third machine polishing data. Further, a data recording device D14 is connected to the stone removing machine 207. The data recording device D14 acquires stone removing data (weight of stone particles, weight of whole grain, mixing rate of stones, total amount of power and the like).

A data recording device D15 is connected to the color sorter 209. The data recording device D15 acquires sorting data (removal rate (sorting rate) of defective grains, the number of times of operations of an ejector of the color sorter, maximum current value, average current value, minimum current value, total amount of power and the like). Further, a data recording device D16 is connected to the sieving machine 210. The data recording device D16 acquires sieving data (rotational speed of sieving machine, percentage of crushed grains, percentage of whole grain, total amount of power and the like).

A data recording device D17 is connected to the measuring and packaging machine 212. The data recording device D17 acquires measuring and packaging data (measurement frequency, cumulative total value of (shipped) measurement, the cumulative number of (shipped) packaging bags, total amount of power and the like).

In the second embodiment, in the same manner as the first embodiment, the calculation portion 5c calculates, based on the characteristics received by the reception portion 5b and information accumulated in the database 5a, operational parameters to be used in processing rice in the satellite facility 3. With such a configuration, it is possible to acquire advantageous effects that are the same as the advantageous effects in the first embodiment.

### C. Modification:

### C-1. Modification 1:

It may be configured such that when the model facility 2 performs learning on one satellite facility 3-1, contents of the learning are sequentially transferred to other satellite facilities 3-2 to 3-n using the satellite facility 3-1, on which learning has performed, as a reference (mutual learning among the satellite facilities 3-1 ... 3-n). This processing may be performed by the calculation portion 5c of the cloud server 5.

### C-2. Modification 2:

In addition to the above-mentioned embodiment, when the model facility 2 receives delivery of grain, operational parameters for processing the grain in the model facility 2 may be calculated by the above-mentioned method. That is, the operational parameters may be calculated based on the characteristics of the delivered grain and information accumulated in the database 5a.

### C-3. Modification 3:

At least a portion of the functions of the above-mentioned cloud server 5 may be disposed at a location on another network. For example, all functions of the cloud server 5 may be provided to the model facility 2, or may be provided in an information processing terminal connected to the model facility 2 via a LAN.

### C-4. Modification 4:

The above-mentioned embodiments are applicable to any grain processing facilities. For example, the above-mentioned embodiments may be applied to a food factory which handles grain.

Having described several embodiments of the present invention, the above-described embodiments of the present invention are intended to only facilitate the understanding of the present invention, and are not intended to limit the present invention thereto. The present invention can be modified or improved without departing from the spirit of the present invention, and includes equivalents thereof. Further, the individual components described in the claims and the specification can be arbitrarily combined or omitted within a range that allows them to remain capable of achieving at least a part of the above-described objects or producing at least a part of the above-described advantageous effects. For example, the above-mentioned modification 2 may be realized separately from the above-mentioned first or second embodiment. In this case, an operation control system for a grain processing facility can be provided which includes a database, a reception portion, a calculation portion, and a controller. The database stores, in a correlated manner, a characteristic of grain delivered to a grain processing facility, an operational parameter used in processing the grain in the grain processing facility, and an index value actually measured with respect to taste of the grain after being processed in the grain processing facility. The reception portion receives the characteristic of grain newly delivered to the grain processing facility. The calculation portion calculates an operational parameter to be used in processing the newly delivered grain based on the received characteristic and information accumulated in the database. The controller controls operation of the grain processing facility based on the calculated operational parameter.

### INDUSTRIAL APPLICABILITY

The present invention is applicable to a variety of grain processing facilities, such as a common grain drying and preparing facility, a rice milling factory, or a food factory.

### REFERENCE SIGNS LIST

- 1: facility (or factory)
- 2: model facility
- 3: satellite facility
- 4: Internet
- 5: cloud server
- 6: correction means
- 7: input means
- 8: weather information acquisition means
- 100: common grain drying and preparing facility
- 101: product receiving hopper
- 102: received product measuring machine
- 103: product receiving portion
- 104: aeration dryer
- 105: aeration-drying portion
- 106: flame dryer
- 107: flame-drying portion
- 108: silo
- 109: silo portion
- 110: husker
- 111: sorter
- 112: measuring and packaging machine
- 113: preparing portion
- 114: test dryer
- 115: autonomous inspection device
- 116: grain particle discriminator
- 117: taste measuring instrument
- 118: rough sorting machine
- 119: received product data file
- 120: rough sorting data file
- 121: drying data file
- 122: husking data file
- 123: sorting data file
- 124: measuring and packaging data file
- 125: storage data file
- 126: master table
- 200: rice milling factory
- 201: product receiving hopper
- 202: rough sorting machine
- 203: product receiving portion
- 204: rice milling machine
- 205: rice milling machine
- 206: rice milling machine
- 207: stone removing machine
- 208: rice milling portion
- 209: color sorter
- 210: sieving machine
- 211: screening portion
- 212: measuring and packaging machine
- 213: measuring and packaging portion
- D: data recording device

## Claims

1. An operation assistance system for a grain processing facility, the operation assistance system comprising:
a database configured to store, in a correlated manner, a first characteristic of a first grain delivered to a model facility, a first operational parameter of the model facility used in processing the first grain in the model facility, and an index value actually measured with respect to taste of the first grain after being processed in the model facility;
a reception portion configured to receive a second characteristic of a second grain delivered to a satellite facility;
a calculation portion configured to calculate, based on the received second characteristic and information accumulated in the database, a second operational parameter to be used in processing the second grain in the satellite facility; and
a providing portion configured to provide the calculated second operational parameter to the satellite facility via a network.

2. The operation assistance system according to claim 1, wherein
the satellite facility includes a plurality of satellite facilities, and
the calculation portion calculates an optimum operational parameter for processing the second grain in the model facility, and performs a correction on the optimum operational parameter according to a condition of each of the plurality of satellite facilities to calculate the second parameter.

3. The operation assistance system according to claim 1 or claim 2, wherein
the reception portion receives the second characteristic via the network.

4. The operation assistance system according to any one of claims 1 to 3, further comprising a controller configured to perform automatic operation of the satellite facility based on the second parameter provided by the providing portion.

5. A grain processing facility comprising:
the model facility;
the satellite facility; and
the operation assistance system according to any one of claims 1 to 4.

6. The grain processing facility according to claim 5, wherein
the model facility includes a data recording device which records various data of an installation which the model facility includes.

7. The grain processing facility according to claim 5 or claim 6, wherein
each of the model facility and the satellite facility is a common grain drying and preparing facility.

8. The grain processing facility according to claim 5 or claim 6, wherein
each of the model facility and the satellite facility is a rice milling factory.

9. A method for controlling automatic operation of a satellite facility of a wide area distributed type grain processing facility which includes a model facility and the satellite facility, the method comprising:
recording a first characteristic of a first grain delivered to the model facility;
processing the first grain in the model facility;
actually measuring an index value with respect to taste of the processed first grain;
preparing a database which stores, in a correlated manner, the first characteristic, a first operational parameter of the model facility used in processing the first grain in the model facility, and the index value;
receiving a second characteristic of a second grain delivered to the satellite facility;
calculating, based on the received second characteristic and information accumulated in the database, a second operational parameter to be used in processing the second grain in the satellite facility;
providing the calculated second operational parameter to the satellite facility via a network; and
performing automatic operation of the satellite facility based on the provided second parameter.
